# EUROPEAN PATENT APPLICATION

(11) **EP 4 140 727 A1**
(43) Date of publication of application: **01.03.2023**
(21) Application number: 21192512.8
(22) Date of filing: 23.08.2021
(51) Int. Cl.: B32B 5/18, C08J 5/18

(54) **MULTILAYER FILM**

(71) Applicant: RKW SE, 68309 Mannheim (DE)
(72) Inventor: OESTHOLM, Lars, 68309 Mannheim (DE)
(74) Representative: Busch, Tobias

(57) **Abstract**

The invention relates to a polyolefinic film with at least three layers. One layer forms an inner layer and at least one further layer is designed as a filled layer. The filled layer has a density of more than 1.00 g/cm³. The inner layer has a foamed structure for setting an overall density of the film of less than 0.98 g/cm³ for a recycling process.

## Description

The invention relates to a polyolefinic film with at least three layers, one layer forming an inner layer and at least one further layer being designed as a filled layer which has a density of more than 1.00 g/cm³.

The classic packaging materials for food, especially for butter and cheese, are based either on satined paper or mostly on an aluminum composite film, which is laminated with wax on the butter side and has real parchment.

Some requirements are placed on these packaging materials, such as good appearance, printability and impermeability to fat and light. In addition, the packaged food should not be impaired by the packaging material itself over a long storage period. Finally, high mechanical strength combined with good foldability is required of the packaging material.

EP 0 445 565 A2 describes a packaging material for solid, fatty filling goods, such as butter. The packaging material consists of an aluminum foil with a greaseresistant and grease-repellent protective lacquer on one side and a glassine layer laminated on by means of an ethylene copolymer on the other side.

EP 2 314 450 A1 discloses a packaging film for butter and cheese, consisting of a laminate which is provided on the outside with a coated aluminum foil, the aluminum foil having a thickness of 5-10 µm and a paper-like HDPE Foil is laminated with a thickness of 20-50 µm. After folding, for example by closing a conventional butter wrapper, the packaging film continues to retain sharp and permanent folds.

DE 10 2010 053 115 A1 describes a pack consisting of paper, foil, tinfoil or other formable, foil-like packaging material, which completely packs pasty goods on the reverse side by initially folding the tube and later folding the end faces.

Aluminum-based food packaging is unfavorable to recycle because it is not pure aluminum, but is combined with many different substances that cannot, however, be separated from each other. In addition, aluminum loses its quality and purity with every recycling step and requires large amounts of energy to be recycled.

Filled polyolefinic packaging films are a more environmentally friendly alternative to conventional packaging films with effective food protection and good printability for an attractive appearance. They have a paper-like appearance and a pleasant feeling experience.

These packaging films are made from recyclable polyolefins with added natural minerals. With a mineral content of over 50%, the packaging film offers an effective barrier against light, oxygen and water vapor and is also greaseresistant. They have significantly improved tear and drop resistance compared to more complex laminate solutions such as PE or paper.

Pure polyolefin waste products based on polyethylene and polypropylene can be remelted directly into new products or processed into regranulate. This recycled plastic is increasingly developing into a technically and economically convincing alternative to new goods, which means that fossil raw materials can be saved.

However, the separation of valuable plastic waste in the recycling process of floatation has proven to be problematic. Here, the light polyolefins are made to float by adding water and then skimmed off. By using mineral fillers to reduce the proportion of fossil raw materials and to achieve the desired mechanical properties and printability, the filled, polyolefinic packaging films no longer float due to their density more than 1.00 g/cm³. These advantageous packaging films cannot be fed into the recycling cycle as desired. However, many butter and cheese consumers expect their packaging films to be recycled.

The object of the invention is to provide food packaging based on polyolefin which is designed to be optimized for floating within the recycling process. The food packaging should have all the advantages of known polyolefinic films. The food packaging should be grease-tight and light-tight, it should be easy to fold, have excellent mechanical properties and be easy to print.

This object is achieved by a polyolefinic film according to the independent main claims of the invention. Preferred variants can be found in the subclaims, the description and the examples.

According to the invention, the polyolefinic film has a multilayer structure, the film preferably being symmetrical. In a preferred variant of the invention, the polyolefinic film has three layers, with at least one layer being filled. Ideally, the two outer layers of the three-layer polyolefinic film are designed to be filled.

In a further design variant, the polyolefinic film has five layers. In another variant the film has seven layers.

Although least the two outer layers are preferably designed to be filled, preferably all layers with the exception of the inner layer contain fillers. All filled layers have in common that they have a density of more than 1.00 g/cm³.

According to the invention, the inner layer has a foamed structure for adjusting an overall density of the film of less than 0.98 g/cm³. Due to the foamed structure, the inner layer has an extremely low density, which makes the overall density of the film suitable for floating in the recycling process.

The foam structure of the inner layer consists of small gas bubbles that are separated by polyolefin-based walls. The walls are made extremely thin, whereby a solid structure with low density is achieved.

The foamed structure is produced during the blow extrusion of the multilayer film. Endothermic blowing agent is added to the masterbatch for controlled foam formation. A few % by weight are sufficient for this process. After blow extrusion, the foam structure of the inner layer is created with the help of a controlled supply of heat. Due to the foamed structure, the density of the inner layer is significantly lower than the density of the filled layers, which results in an overall density that is ideal for the flotation of the recycling process.

Additionally the film provides all the properties that are required for its application for example as material for wrapping food or as a tag. The polyolefinic film impresses with mechanical properties which are required for these special applications.

Ideally, the density of the inner layer is adjusted with the aid of the foam structure so that the total density of the polyolefinic film is less than 0.97 g/cm³, in particular less than 0.96 g/cm³ and/or more than 0.90 g/cm³, in particular is more than 0.92 g/cm³.

The polyolefinic film, which is designed as a food packaging film, in particular for wrapping butter and cheese, has at least one filled layer. Talc and/or titanium dioxide and/or dolomite have proven particularly useful as fillers, the proportion of filler in a layer of the multilayer film being more than 20 % by weight, preferably more than 30 % by weight, in particular more than 40 % by weight and/or less than 90 % by weight, preferably less than 80 % by weight, in particular less than 70 % by weight. The mean diameter D50 of the filler is 2.4 - 2.8 µm. Films made of filled polyolefin are characterized by advantages when printing, folding and the sensory experience when touching.

A filled layer of the multilayer, polyolefinic film has a density of more than 1.05 g/cm³, preferably more than 1.10 g/cm³, in particular more than 1.20 g/cm³ and/or less than 2.50 g/cm3, preferably less than 2.00 g/cm3, in particular less than 1.80 g/cm³.

In order to set the advantageous overall density of the polyolefinic film, the inner layer has a density of more than 0.50 g/cm³, preferably more than 0.55 g/cm³, in particular more than 0.60 g/cm³ and/or less than 0.85 g/cm³, preferably less than 0.75 g/cm³, in particular less than 0.70 g/cm³.

To adjust the overall density of the polyolefinic film as packaging for butter and cheese, the proportion of the thickness of the inner layer on the film is more than 20 %, preferably more than 30 %, in particular more than 40 % and/or less than 90 %, preferably less than 80 %, especially less than 70 %.

In an advantageous embodiment variant, the polyolefinic film is used as packaging for butter and cheese. For this, the total thickness of the film is less than 90 µm, preferably less than 80 µm, in particular less than 70 µm and/or more than 30 µm, preferably more than 40 µm, in particular more than 50 µm.

In an alternative embodiment of the polyolefinic film, the film is used as a label for food packaging. For this purpose, the total thickness of the film is less than 500 µm, preferably less than 400 µm, in particular less than 300 µm and/or more than 100 µm, preferably more than 150 µm, in particular more than 200 µm.

The foamed structure of the inner layer according to the invention is based on the selection and use of special polymers. For this purpose, polyolefins with melt-strengthening properties have proven themselves. The strain hardening or melt hardening is defined as a stress increase that is significantly above the linear viscoelastic characteristic when the polymer is exposed to an elongation flow. In this case, the molten polymer shows a rapid increase in the elongation viscosity at high elongation. Strain set is generally related to the inability of macromolecules to disentangle fast enough to follow the exponential deformation of a molten polymer as it is stretched. Long-chain branched polymers such as LDPE or modified PP grades are known to exhibit melt consolidation as is known to a person skilled in the art of polymer rheology.

The inner layer comprises at least 10 % by weight of a strain hardening polymer that exhibits a rapid increase in extensional viscosity over time.

In an advantageous variant of the invention, the inner layer comprises at least 20 % and preferably less than 50 % of a polyolefin with melt-strengthening properties.

The flow behavior of polyolefins is described using the melt flow index (MFI) according to ASTM 1238, usually at a temperature of 190 °C for polyethylene and 230 °C for polypropylene with a load of 2.16 or 5 kg. A higher melt index correlates here with a lower average molecular weight of the polymer. At the same time, the higher the melt index of a polymer, the lower the melt viscosity, which is advantageous for good dispersion of the filler and a high output of the extrusion system. On the other hand, polymers with a high molecular weight, ie a low melt index, are advantageous with regard to mechanical stability, in particular tensile strength or toughness.

The inner layer according to the invention comprises at least 10 % by weight of a polyethylene with an MFI (190 °C./2.16 kg) of less than 1.0 g/10 min., preferably less than 0.6 g/10 min.

In a particularly advantageous embodiment of the invention, the inner layer comprises at least 10 % by weight of a polypropylene with an MFI (230 °C./2.16 kg) of less than 1.0 g/10 min., preferably less than 0.6 g/10 min.

In addition and/or alternatively, the inner layer preferably comprises at least 50 % by weight and preferably less than 80 % by weight of a polyolefin with an MFI of less than 1.0 g/10 min, preferably less than 0.8 g/10 min.

The film according to the invention impresses with its impressive mechanical properties. The film has a flexural strength according to ISO 5628 which is greater by a factor of 1.1 than the tensile strength measured according to ISO 527, preferably greater than a factor of 1.2, in particular greater than a factor of 1.3.

A packaging film for butter and cheese should have stable folding or folding resistance measured in accordance with ASTM D920/40 over time in the warehouse, in the shop and at the customer's premises. The film has dead-fold properties according to ASTM D920/40 of more than 30%, in particular more than 35%, preferably more than 40%.

In order to keep butter and cheese fresh for a long time and also to make the packaging film look appealing, the polyolefinic film should have good fat resistance. The fat resistance of paper, coated paper or plastic films is tested with dyed palm kernel fat according to DIN 53116. The test side is coated with the test fat and then placed on a glass plate and, if necessary, additional weights. After the exposure time has expired, the fat passages with a size of up to 1 mm that can be seen with the naked eye on the display paper within the delimited test area are evaluated. If only grease passages up to 1.0 mm are observed, the test is considered to have been passed; in the case of grease passages with a size greater than 1.0 mm, the test must be carried out with milder test conditions.

The film according to the invention has a fat penetration according to DIN 53116 of less than one fat penetration per 100 × 100 mm, which makes the food packaging film particularly suitable as packaging for butter and cheese. The film keeps the food fresh, does not let fat through and looks appealing.

According to the invention, the multilayer, polyolefinic film with at least three layers is produced in a process in which the composition is first produced, which is then extruded into a multilayer film with the formation of an inner layer. The inner layer is enclosed by two outer layers, which are designed as filled layers. The extrusion is followed by the foaming of a structure in the inner layer of the multilayer, polyolefinic film, which is carried out with a chemical, endothermic blowing agent.

Chemical blowing agents are reactive additives that release gases during the processing of thermoplastics. When heat is supplied, for example through temperature-controlled rollers, these propellants decompose and develop environmentally neutral gases. Often these are carbon dioxide and water vapor. The active ingredients of the propellants are based on carbonates and carboxylic acids. Since heat is required to initiate and continue the reaction, one speaks of endothermic blowing agents. Their advantage is that when the supply of heat is interrupted, gas formation comes to a standstill and can be restarted with further supply of heat.

The foamed structure can also be produced using physical methods. For example, gas bubbles could be blown into the inner layer. The foamed structure can be created by using physical foaming alternatively or in addition to chemical foaming.

The extrusion of the multilayer, polyolefinic film is carried out as a blow extrusion. A blowing ratio of more than 1: 1.5, preferably more than 1: 2.0, in particular more than 1.2, is preferably used. The blow-up ratio during blow extrusion is preferably less than 1: 4.5, more preferably less than 1: 4.0, in particular less than 1: 3.5.

According to the invention, the polyolefinic film is used as wrapping paper for butter and cheese. Due to the special recipe and the innovative manufacturing process, the polyolefinic film has a paper-like texture, excellent fat and moisture resistance and can be easily and permanently folded. In addition, the polyolefinic film can easily be printed on, the print being permanent and not affecting the food.

Ideally, the polyolefinic film has all the advantages of known filled, polyolefinic films and at the same time has a density of less than 0.98 g/cm³, which means that the film can be recovered for recycling during flotation. In this way, a closed cycle of polyolefinic food packaging can be implemented and executed.

According to the invention, the polyolefinic film is used as a moisture or oil resistant label or tag.

Further advantages and features of the invention emerge from the description of exemplary embodiments with reference to the drawings and from the drawings themselves. It shows:

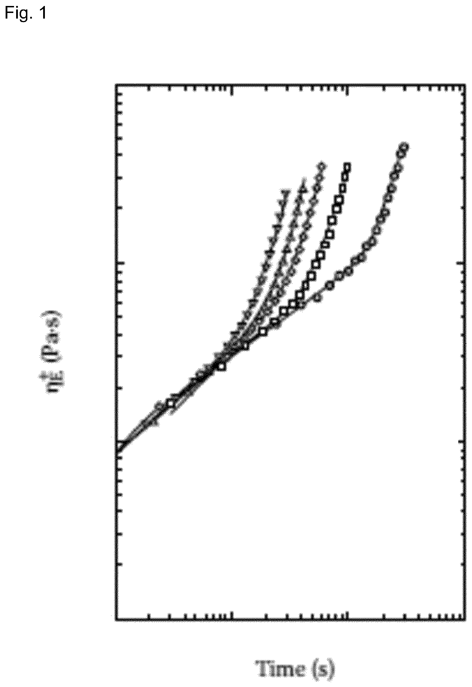

- Fig. 1: typical melt-strengthening properties of a branched polyolefin at 200 ° C in an extensional rheometer.

Fig. 1 demonstrate the behavior of a branched polyolefin, in particular a polyethylene, which is subjected to an extensional flow. Fig. 1 shows the dynamic viscosity versus time for a melt strain hardening polyolefin. The elongation hardening shown is measured in an extensional rheometer at 200 °C. The branched polyethylene shows a stress growth which is clearly above the linear viscoelastic characteristic.

The invention is explained below using an example of a three-layer polyolefinic film, without restricting the invention thereto.

In this example, the following components are used for the inner layer:
- 67.9% BorShape FX1001
- 29.1% Agility EC 7220
- 3.00% Luvobatch PE BA 9537

The inner layer has a density of 0.62 g/cm³ and a layer thickness of 28 µm.

The following components are used for the two identical outer layers:
- 50.8% dolomite with a D50 of 2.4 - 2.8 µm
- 49.2% PE with an MFI of less than 1.0 g/10 min (190 °C/2.16 kg) according to ASTM 1238

The outer layers each have a density of 1.24 g/cm³ and a layer thickness of 16 µm.

The three-layer film has a layer thickness of 60 µm and an overall density of 0.951 g/cm³. The weight per unit area is 57 g/cm², the dead-fold properties are more than 50 % according to ASTM D920/40 and the fat penetration according to DIN 53116 is less than one fat penetration per 100 x 100 mm.

## Claims

1. Polyolefinic film with at least three layers
- wherein one layer forms an inner layer and
- at least one further layer is designed as a filled layer, which has a density of more than 1,00 g/cm³,
**characterized in that**
the inner layer has a foamed structure for adjusting the total density of the film for a recycling process to a value of less than 0.98 g/cm³.

2. Film as claimed in claim 1, **characterized in that** the total density of the film is less than 0.97 g/cm³, in particular less than 0.96 g/cm³ and/or more than 0.90 g/cm³, in particular more than 0.92 g/cm³.

3. Film as claimed in claim 1 or 2, **characterized in that** the filled layer has a density of more than 1.05 g/cm³, preferably more than 1.10 g/cm³, in particular more than 1.20 g/cm³ and/or less than 2.50 g/cm³, preferably less than 2.00 g/cm³, in particular less than 1.80 g/cm³.

4. Film as claimed in any of claims 1-3, **characterized in that** the inner layer has a density of more than 0.50 g/cm³, preferably more than 0.55 g/cm³, in particular more than 0.60 g/cm³ and/or less than 0.85 g/cm³, preferably less than 0.75 g/cm³, in particular less than 0.70 g/cm³.

5. Film as claimed in any of claims 1-4, **characterized in that** the proportion of the thickness of the inner layer in the total thickness the film is more than 20 %, preferably more than 30 %, in particular more than 40 % and/or less than 90 %, preferably less than 80 %, in particular less than 70 %.

6. Film as claimed in any of claims 1-5, **characterized in that** the film has a total thickness of less than 90 µm, preferably less than 80 µm, in particular less than 70 µm and/or more than 30 µm, preferably more than 40 µm, in particular more than 50 µm.

7. Film as claimed in any of claims 1-5, **characterized in that** the film has a total thickness of less than 500 µm, preferably less than 400 µm, in particular less than 300 µm and/or more than 100 µm, preferably more than 150 µm, in particular more than 200 µm.

8. Film as claimed in any of claims 1-7, **characterized in that** the inner layer contains a minimum of 20% by weight and preferably less than 50% by weight of a polyolefin with melt strain hardening properties.

9. Film as claimed in any of claims 1-8, **characterized in that** the inner layer contains a minimum of 50% by weight and preferably less than 80% by weight a polyolefin with an MFI of less than 1.0 g/10 min., especially less than 0,9 g/10 min, preferably less than 0.8 g/10 min.

10. Film as claimed in any of claims 1-9, **characterized in that** the film has a bending stiffness (ISO 5628) in accordance with classic beam theory which is larger than the theoretical bending stiffness (ISO 5628) based on the film tensile modulus (ISO 527) by more than the factor 1.1, especially more than the factor 1.2, preferably more than the factor 1.3.

11. Film as claimed in any of claims 1-10, **characterized in that** the film has dead-fold properties (ASTM D920/40) more than 30 %, especially more than 35 %, preferably more than 40 %.

12. Film as claimed in any of claims 1-11, **characterized in that** the film has a grease penetration DIN 53116 of less than 1 per 100 mm x 100 mm.

13. A method for producing a polyolefinic film with at least three layers, comprising at least the following steps:
- making a composition,
- extrusion of the composition into a multilayer film with the formation of an inner layer,
- Foaming of a structure.

14. Method as claimed in claim 13, **characterized in that** the extrusion is carried out as a blow extrusion.

15. Use of film as claimed in any of claims 1-12 as packaging for food, in particular for wrapping butter or cheese.

16. Use of a film as claimed in any of claims 1-12 as a moisture or oil resistant label or tag.
